# EUROPÄISCHE PATENTSCHRIFT

(11) **EP 0 571 472 B1**
(45) Veröffentlichungstag und Bekanntmachung des Hinweises auf die Patenterteilung: **03.05.1995**
(21) Anmeldenummer: 92904853.6
(22) Anmeldetag: 18.02.1992
(51) Int. Cl.: B62D 5/07, F01L 1/34

(54) **HYDRAULIKANLAGE**
HYDRAULIC SYSTEM
SYSTEME HYDRAULIQUE

(30) Priorität: 20.02.1991 DE 4105144; 22.06.1991 DE 4120664; 19.08.1991 DE 4127327
(43) Veröffentlichungstag der Anmeldung: 01.12.1993
(73) Patentinhaber: ITT Automotive Europe GmbH, 60488 Frankfurt (DE)
(72) Erfinder: KAHRS, Manfred, D-6200 Wiesbaden (DE); KUNZ, Gerhard, D-6307 Linden (DE); FLECK, Franz, D-6251 Langenscheid (DE); KRINES, Hans-Gebhard, D-6390 Usingen 2 (DE); PETERKNECHT, Walter, D-6393 Wehrheim 1 (DE); HUTHMACHER, Winfried, D-6000 Frankfurt/Main 90 (DE)
(74) Vertreter: Portwich, Peter
(86) Internationale Anmeldenummer: EP9200337
(87) Internationale Veröffentlichungsnummer: WO9214641

(56) Entgegenhaltungen:
- EP-A- 0 317 372
- EP-A- 0 406 527
- DE-U- 8 806 109
- FR-A- 2 378 659
- FR-A- 2 456 007

## Beschreibung

Die Erfindung betrifft eine Hydraulikanlage mit einer von einem Verbrennungsmotor direkt angetriebenen Hydraulikpumpe, deren Fördermenge am Eingang oder Ausgang geregelt ist. Eine derartige Hydraulikanlage ist in der älteren, jedoch nicht vorveröffentlichten deutschen Patentanmeldung 40 33 105 beschrieben. Bei dieser vorgeschlagenen Anlage ist die Versorgung eines hydraulischen Verbrauchers vorgesehen. Das Betriebsmedium (Druckmittel) der Pumpe bzw. Pumpenkombination kann das Schmiermittel des Verbrennungsmotors sein, es kann aber auch ein separater Druckmittelkreislauf vorgesehen sein. Sind in einem Kraftfahrzeug, für das eine derartige Hydraulikanlage beispielsweise vorgesehen ist, jedoch mehrere hydraulische Verbraucher vorhanden und jeder Verbraucher wird unabhängig von allen anderen mit Druckmittel versorgt, so bedeutet dies einen erheblichen Bauaufwand, einen enormen Platzbedarf und hohe Kosten.

Aus der DE-A- 2 918 475 ist eine Hydraulikanlage mit einer von einem Verbrennungsmotor angetriebenen Hydraulikpumpe bekannt. Die Fördermenge der Hydraulikpumpe wird durch eine Saugdrossel geregelt. Von der Hydraulikpumpe wird eine erste Einrichtung und eine zweite Einrichtung, bei denen es sich jeweils um einen Hydromotor handelt, mit Druckmittel versorgt.

Der Erfindung liegt daher die Aufgabe zugrunde, eine gattungsgemäße Hydraulikanlage so weiterzubilden, daß eine erhebliche Kosteneinsparung bei geringem Platzbedarf und Gewicht sowie optimaler Energieausnutzung erzielt wird.

Die Aufgabe wird durch die sich aus dem kennzeichnenden Teil des Hauptanspruchs ergebende Merkmalskombination gelöst. Die Erfindung besteht im Prinzip also darin, daß die bisher nur für die variable Nockenwellenverstelleinrichtung vorgesehene Pumpe für weitere Verbraucher mitbenutzt wird, von denen einer eine weitere variable Nockenwellenverstelleinrichtung ist, so daß deren Pumpen entfallen können und somit Kosten und Platz gespart werden.

Dabei können die beiden Nockenwellen bei Motoren mit nicht hintereinander angeordneten Zylindern (beispielsweise V-förmiger Anordnung) jeweils eine Reihe von Einlaßventilen betätigen. Eine andere Möglichkeit besteht darin, daß eine der beiden Nockenwellen nur Einlaßventile betätigt, während die andere Nockenwelle Auslaßventile betätigt.

Besonders wenn es sich um gleichwertig oder gleichrangig mit Druckmittel zu versorgende Einrichtungen handelt, empfiehlt sich in Weiterbildung der Erfindung die Anwendung der Merkmalskombination nach Anspruch 2. Dabei läßt sich die Ansteuerung der Magnetventile derart bewirken, daß hier eine Prioritätsschaltung mit entsprechenden Merkmalen nach Anspruch 16 ersetzt wird. Der Steuerung kann aber auch eine gewisse Zufälligkeit anhaften, so daß sie bewirkt, daß zumindest eine der beiden Einrichtungen auch bei verminderter Pumpenleistung betätigt wird.

Eine sehr einfache Schaltung zur Bevorzugung eines sicherheitsrelevanten Verbrauchers ergibt sich gemäß der Merkmalskombination nach Anspruch 3.

Eine sehr einfache Schaltung zum Betreiben zweier hydraulisch gleichwertiger Einrichtungen zeigt die Merkmalskombination nach Anspruch 4. Hierbei werden beide Einrichtungen von einem einzigen Pumpenkreis gleichwertig also ohne gegenseitige Beeinflussung mit Druckmittel versorgt. Die Zuteilung des Druckmittels erfolgt auslegungsgemäß entsprechend dem Bedarf der Einrichtungen durch das Stromteilerventil. Diese Schaltung ist insbesondere geeignet, wenn beide Einrichtungen getrennte Nockenwellen zur Steuerung von jeweils nur Auslaßventilen, insbesondere aber Einlaßventilen, dienen. Eine andere einfache Schaltung kann darin bestehen, daß vorzugsweise bei gleichartigen Einrichtungen, insbesondere zwei Nockenwellen betätigenden Einrichtungen, eine Anordnung nach Anspruch 5 gewählt wird. Eine derartige Schaltungsanordnung ist aber auch dann zweckmäßig, wenn durch eine Einrichtung Einlaß- und eine zweite Einrichtung Auslaßnockenwelle verstellt werden sollen, da zur Optimierung der Verbrennung im Motor die Einlaßnockenwelle in feineren Schritten verstellt werden muß als die Auslaßnockenwelle. Hierzu bietet sich in vorteilhafter Weiterbildung die Merkmalskombination nach Anspruch 6 an.

Eine weitere Möglichkeit bei gleichartigen Einrichtungen stellt die Schaltung nach Anspruch 7 dar. Damit das andere System (Auslaßventile), welches über das Zweistellungsventil angeschlossen ist, nicht von der Momentanfunktion des über das Proportionalventil angeschlossenen Antriebssystems (Einlaßventil) beeinflußt wird, ist die Anlage gemäß Anspruch 7 derart ausgelegt, daß im zuerst genannten System ein niedrigerer Druck herrscht als im zuletzt genannten System. Dies gelingt in einfacher Weise durch die Wahl eines entsprechend größeren Querschnitts des hydraulischen Stellkolbens im Niedrigdrucksystem, also dem die Auslaßventile ansteuernden System.

Entsprechend den Weiterbildungen nach Anspruch 8 und 9 empfiehlt es sich, daß das Zweistellungssystem ein Dreiwege-Zweistellungsventil ist und daß der Kolben zur Verstellung der die Auslaßventile steuernden Nockenwelle mittels einer Feder in Einfahrrichtung des Kolbens vorgespannt ist.

Gemäß einer weiteren vorteilhaften Weiterbildung betrifft eine weitere Einrichtung einen bevorzugt mit Druckmittel zu versehenden, insbesondere sicherheitsrelevanten, Verbraucher. Das kann gemäß Anspruch 10 der hydraulische Stellzylinder einer hydraulischen Hilfskraftlenkung, einer Fahrwerksregelung, eines Kupplungsverstärkers oder Kupplungsautomaten oder aber auch eine Bremsanlage sein.

Eine Möglichkeit, um eine Prioritätsschaltung zu vermeiden, ist durch die Merkmalskombination nach Anspruch 11 gegeben. Solche Pumpen arbeiten weitgehend verlustfrei, vor allen Dingen, wenn sie saugseitig geregelt sind. Dabei kann gemäß Anspruch 12 die Pumpe wahlweise als Mehrkolbenpumpe mit nur einem Kolbenstern ausgebildet sein, wobei mehrere Kolben zu einem Pumpenkreis zusammenschaltbar sind oder gemäß Anspruch 13 mit mehreren Kolbensternen versehen sein, die von einer gemeinsamen Antriebswelle angetrieben werden. Wie weiter oben schon erwähnt, liegt der Vorteil einer derartigen Ausführung darin, daß mit geringfügigen Mehrkosten die einzelnen Einrichtungen weitgehend, ohne Rückwirkungen untereinander, mit Druckmittel versorgt werden können. Während dabei jedem Pumpenkreis mehrere, beispielsweise gleichartige oder gleichwertige Einrichtungen zugeordnet werden, gibt sich eine weitere Verbesserung hinsichtlich Rückwirkungsfreiheit durch Anwendung der Merkmale nach Anspruch 14. Bei dieser Ausführungsform, bei der jedem Verbraucher ein eigener Pumpenkreis zugeordnet ist, ergibt sich zwar unter Umständen der Nachteil einer etwas zu hohen Förderleistung zu bestimmten Zeiten in einzelnen Kreisen, es wird aber jedes Sicherheitsrisiko durch Rückwirkung der einzelnen Einrichtungen untereinander vermieden. Es ist aber auch denkbar, daß ein Pumpenkreis mehrere Verbraucher, die auch vorzugsweise parallel geschaltet sein können, besitzt. Die Einrichtungen sollten dabei bevorzugt gleichgeordnet sein. Dabei empfiehlt sich aber insbesondere die Anwendung der Merkmalskombination nach Anspruch 16, gemäß der eine Prioritätsschaltung für den sicherheitsrelevanten Verbraucher vorgesehen wird.

Eine besonders leise Arbeitsweise der Hydraulikanlage ergibt sich durch Anwendung der Merkmalskombination nach Anspruch 17, da die große Masse des Motors die Schwingungen der Pumpe bedämpft.

Durch die im Anspruch 19 angegebene Maßnahme, daß die Pumpe mittelbar - etwa durch Zahnräder und/oder eine Kette und/oder einen Zahnriemen - oder unmittelbar von der Nockenwelle oder aber der Kurbelwelle angetrieben wird, werden die energetischen Verluste noch einmal herabgesetzt.

Weitere Verbesserungen hinsichtlich der Hydraulikanlage lassen sich durch die hinsichtlich der Pumpe und des Schmierkreislaufes angewendeten Maßnahmen gemäß Anspruch 20 bis 24 erreichen.

Die Maßnahmen gemäß Anspruch 20 haben den Vorteil, daß der Hydraulikanlage frisch gefördertes und damit auch gefiltertes Schmiermittel als Betriebsmedium zugeführt wird, ohne daß die betriebsbedingten Druckschwankungen im Schmierkreislauf des Verbrennungsmotors auf das Ansaugverhalten der Pumpe der Hydraulikanlage übertragen werden. Das Zwischenreservoir läßt sich an einer günstigen Stelle innerhalb oder außerhalb des Verbrennungsmotors anordnen und bietet dadurch dem Konstrukteur viele Möglichkeiten für die Anordnung und den Antrieb der Hydraulikpumpe. Der Bauaufwand für das Bevorraten und Rückführen eines gesonderten Betriebsmediums entfällt. Besonders vorteilhaft ist die erfindungsgemäße Hydraulikanlage, wenn sie zur Betätigung von Stellorganen innerhalb des Verbrennungsmotors, beispielsweise zur Motorsteuerung dient, da dann das Betriebsmittel über die für das Schmiermittel vorgesehenen Rücklaufkanäle des Verbrennungsmotors zur Schmiermittelwanne zurückgeleitet werden kann.

Um die dem Zwischenreservoir zugeführte Betriebsmittelmenge auf das erforderliche Maß zu begrenzen, kann gemäß Anspruch 21 in der Verbindungsleitung vom Schmierkreislauf zum Zwischenreservoir eine Drosselblende vorgesehen sein.

Da das Zwischenreservoir drucklos bleibt, bietet die erfindungsgemäße Hydraulikanlage entsprechend Anspruch 22 weiterhin die Möglichkeit, die Fördermenge der Hydraulikpumpe durch Saugdrosselung zu regeln. Eine solche Regelung ist bei einem Antrieb durch einen Verbrennungsmotor sehr vorteilhaft, um die Fördermenge der Hydraulikpumpe bei höheren Motordrehzahlen weitgehend verlustfrei zu begrenzen.

Eine weitere Verbesserung wird nach Anspruch 23 erreicht.

Diese Ausgestaltung nach Anspruch 23 ermöglicht einen einfachen Aufbau der Hydraulikanlage und eine einfache Ausgestaltung der Hydraulikpumpe, da an dieser auftretende Leckverluste unmittelbar in den Innenraum des Verbrennungsmotors geleitet werden können, so daß eine besondere Abdichtung der Hydraulikpumpe entbehrlich ist.

Die Ausgestaltung nach Anspruch 24 zeichnet sich in erster Linie durch einen geringen Bauaufwand aus, da ein dichter Verschluß auf einer Seite des Pumpengehäuses entfällt. Durch die Anordnung der Stauscheibe wird ferner ein Ansaugen von Luft über die Kolbenspalte vermieden, so daß eine luftfreie Förderung des Betriebsmediums und damit eine Reduzierung der Pumpengeräusche gewährleistet ist. Auch die Alterung des Betriebsmediums wird durch eine luftfreie Förderung erheblich vermindert.

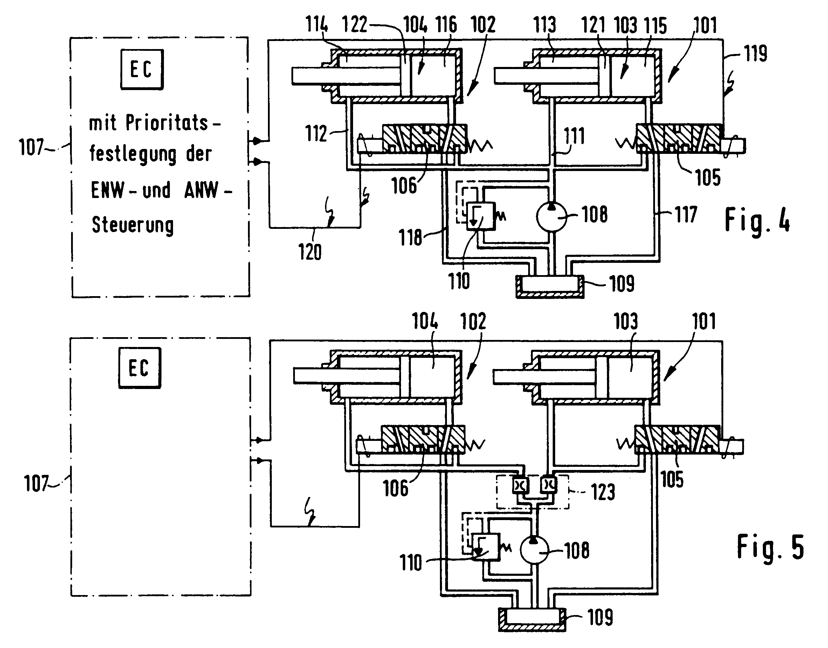

Mehrere Ausführungsbeispiele der Erfindung werden nachfolgend anhand der Zeichnungen erläutert. Dabei werden in den Fig. 4, 5, 6, 9 und 10 verschiedene Möglichkeiten zur Anordnung zweier Nockenwellenverstelleinrichtungen beschrieben.

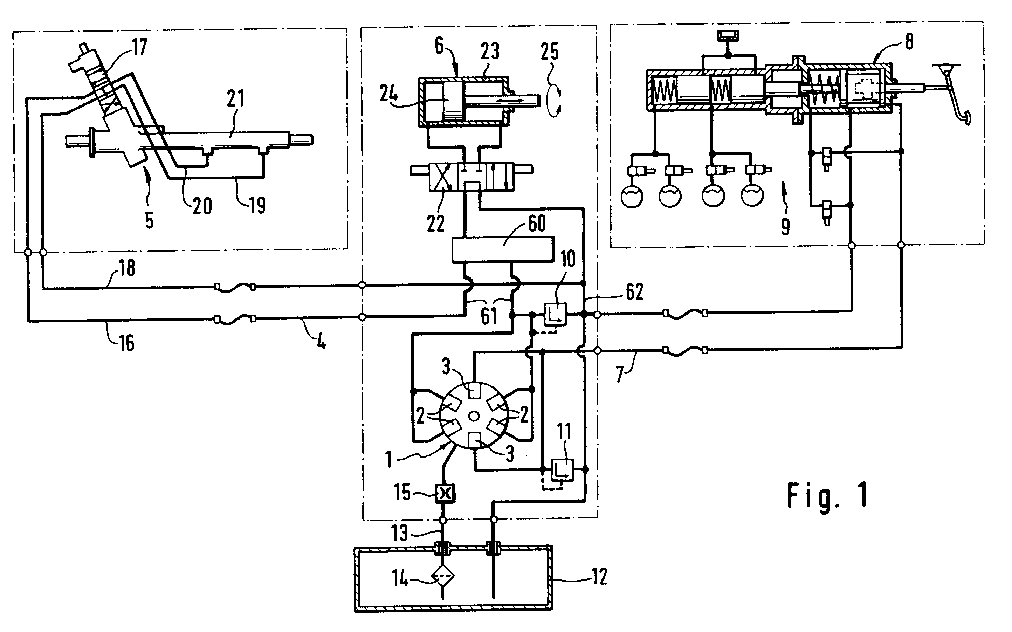

Zu den Fig. 1, 2, 3, 7 und 8 werden verschiedene Möglichkeiten angegeben, weitere hydraulische Verbraucher an eine erfindungsgemäße Hydraulikanlage anzuschließen, wobei der Übersichtlichkeit halber nur jeweils eine Nockenwellenverstelleinrichtung abgebildet und beschrieben ist.

Im einzelnen zeigen:
- Fig. 1: eine erfindungsgemäße Hydraulikanlage mit einer Pumpe, einer Nockenwellenverstellung, einer hydraulischen Hilfskraftlenkung sowie einer ABS-Bremsanlage mit hydraulischem Verstärker,
- Fig. 2: eine Anlage, die zusätzlich einen zweiten Pumpenkolbenstern sowie eine Niveauregeleinrichtung und einen weiteren Verbraucher aufweist,
- Fig. 3: eine Anlage, bei der Nockenwellenverstellung und Hilfskraftlenkung jeweils an einen Pumpenkreis angeschlossen sind.
- Fig. 4: eine erfindungsgemäße Hydraulikanlage mit zwei Einrichtungen zur Nockenwellenverstellung und je einem Elektromagnetventil, wobei die Priorität elektronisch gesteuert wird,
- Fig. 5: eine andere erfindungsgemäße Hydraulikanlage mit zwei Einrichtungen zur Nockenwellenverstellung mit hydraulischem Stromteilerventil,
- Fig. 6: eine weitere erfindungsgemäße Hydraulikanlage mit zwei Einrichtungen zur Nockenwellenverstellung mit entsperrbarem Rückschlagventil,
- Fig. 7: eine erfindungsgemäße Hydraulikanlage mit einer Einrichtung zur Nockenwellenverstellung und einem hydraulischen Kupplungsverstärker, wobei ein Druckschalter ein Signal zum Sperren der Druckmittelversorgung der Nockenwellenverstelleinrichtung an deren Steuerventil anlegen kann und
- Fig. 8: eine erfindungsgemäße Hydraulikanlage mit einer Einrichtung zur Nockenwellenverstellung und einem Kupplungsautomaten, wobei ein Druckschalter ein normalerweise geschlossenes, in die Verbindung zwischen Nockenwellenverstelleinrichtung und Pumpe geschaltetes 2/2-Wegeventil öffnen kann,
- Fig. 9: zwei gleichgeordnete an einen Pumpenkreis angeschlossene Einrichtungen, insbesondere Nockenwellenverstelleinrichtungen,
- Fig. 10: eine abgewandelte Ausführungsform des Ausführungsbeispiels nach Fig. 9,
- Fig. 11: eine vorteilhafte pumpenseitige Versorgung einer erfindungsgemäßen Hydraulikanlage und
- Fig. 12: eine Schnittdarstellung einer an einem Motorgehäuse angeflanschten Radialkolbenpumpe mit integeriertem Zwischenreservoir für die Anwendung in einer Hydraulikanlage gemäß Fig. 1 bis 11.

In Fig. 1 ist schematisch ein Stern einer Radialkolbenpumpe 1 mit sechs Kolben 2,3 gezeigt. Die vier Kolben 2 sind zu einem Pumpenkreis 4 zusammengeschaltet, der die hydraulische Servolenkung 5 und über eine Prioritätshaltung parallel geschaltete variable Nockenwellenverstellung 6 mit Druckmittel versorgt. Die beiden Kolben 3 sind zum Pumpenkreis 7 zusammengeschaltet, der den hydraulischen Verstärker 8 einer hydraulischen Bremsanlage 9 mit Druckmittel versorgt.

In jeden Pumpenkreis 4,7 ist ein Druckbegrenzungsventil 10,11 eingefügt, welches ab einem vorgegebenen Druck zum drucklosen Behälter 12 hin öffnet. Aus diesem Behälter 12 saugt die Pumpe 1 auch das Druckmittel an. In der Saugleitung 13 sind ein Filter 14 und eine Drossel 15 angeordnet, die den maximalen Ansaugstrom begrenzt.

Auf die hydraulische Bremsanlage 9 mit ihrem Verstärker 8 wird nicht näher eingegangen, da derartige, insbesondere auch blockiergeschützte Anlagen, zum allgemeinen Stand der Technik gehören und sich eine detaillierte Funktionsbeschreibung im Zusammenhang mit der Erfindung daher erübrigt.

Vom Pumpenkreis 4 führt eine Leitung 16 direkt von der Pumpe 1 zu einem 4/3-Wegeventil 17 der hydraulischen Servolenkung 5. Diese ist also der vorrangige Verbraucher dieses Pumpenkreises 4. In der dargestellten Position des Ventils 17 besteht eine offene Verbindung zwischen der Leitung 16 zu der in dem Behälter 12 führenden Leitung 62. Auf diese Weise kann der Stellzylinder 21 von der Pumpe 1 mit Druckmittel versorgt werden.

Weiterhin führt eine Verbindung von dem Pumpenkreis 4 über eine Leitung 61, eine Prioritätsschaltung 60 zu dem 4/3-Proportionalventil 22 und von dort zu der Nockenwellenverstellung 6. Durch Umschalten des Ventils 17 kann wahlweise die rechte oder die linke Seite des Stellzylinders, d.h. die Leitung 19 bzw. 20 mit dem Pumpendruck über die Leitung 16 beaufschlagt werden. Die andere Seite des Stellzylinders 20 ist dann mit dem Behälter 12 verbunden.

Das 4/3-Proportionalventil 22 steuert den hydraulischen Druck im Stellzylinder 23 der Nockenwellenverstellung 6. In der gezeigten Mittelposition des Ventiles besteht keine direkte Verbindung zwischen den Leitungen 61 und 62, so daß der Stellzylinder 23 von dem Pumpendruck abgetrennt ist. Auf diese Weise ist der Stellzylinder 23 hydraulisch blockiert. In jeder der beiden anderen Ventilstellungen des Ventils 22 wird der Kolben 24 einseitig mit Druck beaufschlagt und verschiebt sich entsprechend. Gleichzeitig wird eine Nockenwelle über nicht dargestellte Verzahnungselemente um einen gewissen Winkel verdreht. Letztere ist durch den Pfeil 25 angedeutet.

Um den Stellzylinder 21 der Servolenkung 5 immer vorrangig mit hinreichendem Druck der Pumpe 1 versorgen zu können, ist die Prioritätsschaltung 60 vorgesehen. Das nicht näher erläuterte Element 60 sorgt dafür, daß bei Betätigung der Servolenkung 5 kein Druckölstrom zur Nockenwellenverstelleinrichtung 6 fließen kann.

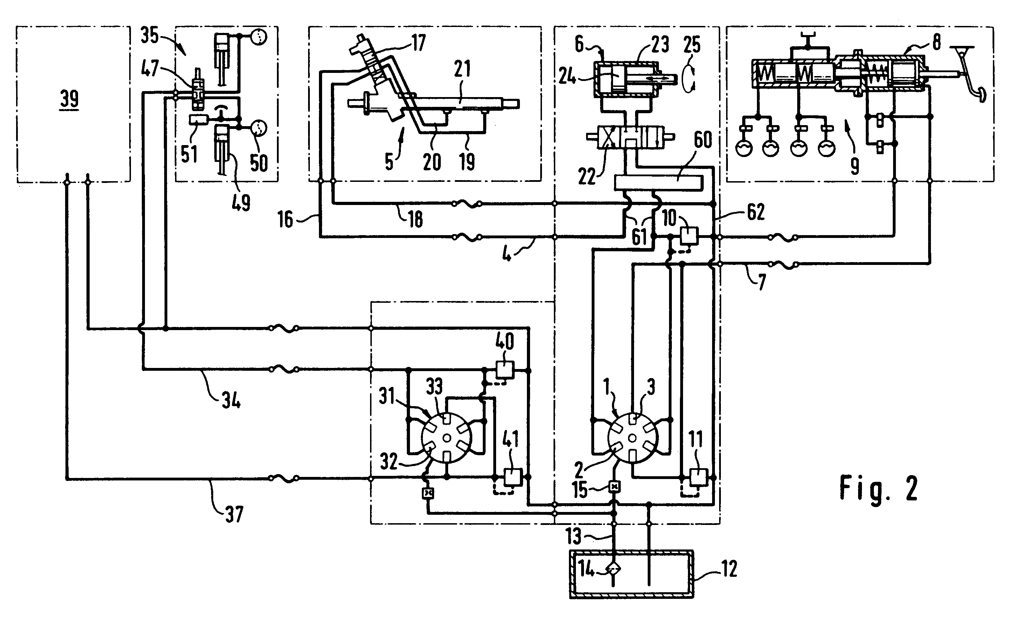

In allen Figuren sind bauliche Einheiten jeweils durch strichpunktierte Linien angedeutet. In Fig. 2 sieht man neben den oben beschriebenen Einzelteilen einen zweiten Pumpenkolbenstern 31 mit Kolben 32,33, wobei beide Pumpen 1,31 von derselben Welle angetrieben werden.

Wie bei der Pumpe 1, sind auch bei der Pumpe 31 jeweils die Kolben 32 bzw. 33 zu einem Pumpenkreis 34 bzw. 37 zusammengeschaltet. In den Kreisen 34 und 37 sind Druckbegrenzungsventile 40 und 41 vorgesehen, die zum Behälter 12 hin Druckmedium ableiten können. Von dem Pumpenkreis 34 wird eine Vorrichtung zur Niveauregelung 35 mit Druckmittel versorgt. Sie wird durch ein 4/3-Wege-Ventil 47 gesteuert. Angedeutet sind weiterhin zwei Stoßdämpfer 49, zwei Druckspeicher 50 sowie ein Bremskraftregler 51. Der Kreis 37 versorgt eine weitere Vorrichtung 39 mit Druckmittel. Dies könnte etwa ein Kupplungsverstärker sein.

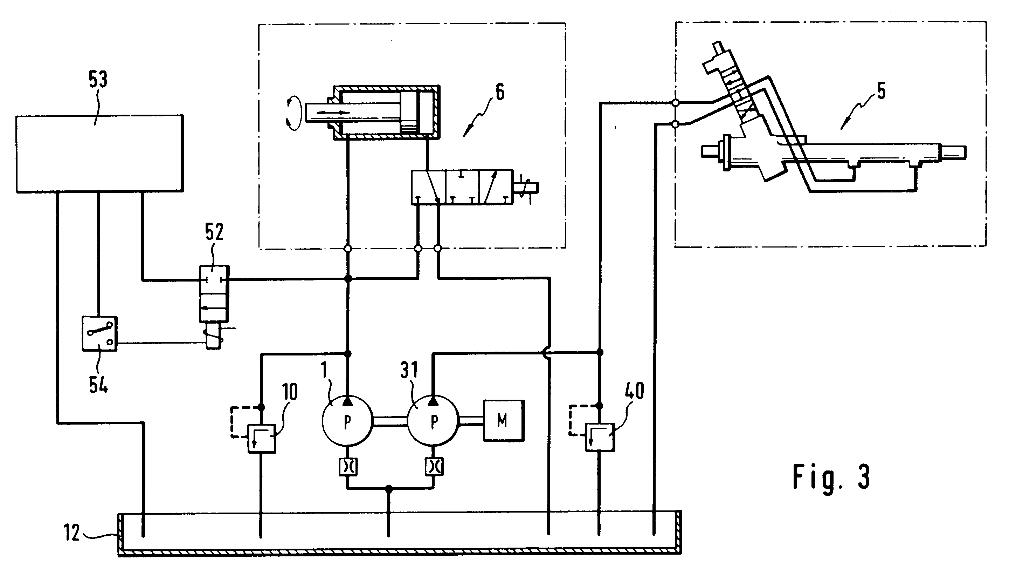

In Fig. 3 ist wieder eine Doppel-Pumpe mit zwei Kolbensternen 1,31 gezeigt, wobei Pumpe 31 die hydraulische Servolenkung 5 mit Druckmittel versorgt. Die Pumpe 1 versorgt primär die Nockenwellenverstellung 6 und sekundär, über das 2/2-Wege-Ventil 52 eine schlupfgeregelte Differentialsperre 53. Durch eine Prioritätsschaltung, angedeutet als Schalter 54, ist sichergestellt, daß im Bedarfsfall die Differentialsperre 53 mit Druck beaufschlagt wird.

In den Figuren 4 bis 6 sind jeweils eine Einrichtung 101 zum Verstellen einer Einlaßnockenwelle und eine Einrichtung 102 zum Verstellen einer Auslaßnockenwelle gezeigt. Jede Einrichtung 101,102 besteht aus einem doppelt wirkenden hydraulischen Zylinder 103,104 und einem elektronisch ansteuerbaren Proportional-Magnetventil 105,106 mit drei möglichen Positionen. Die Magnetventile 105,106 werden von einer gemeinsamen elektronischen Kontrolleinheit 107 gesteuert. Diese kann Bestandteil des erweiterten elektronischen Motor-Managements sein.

Zur Versorgung mit Druckmittel ist in allen Ausführungsbeispielen eine hydraulische Pumpe 108 vorgesehen, die aus einem drucklosen Behälter 109 Druckmittel ansaugt. Dieser Behälter 109 dient gleichzeitig zum Sammeln des aus den verschiedenen Verbrauchern (103,104,125,128) zurückfließenden Druckmittels. Parallel zur Pumpe 108 ist jeweils ein Druckbegrenzungsventil 10 angeordnet, welches zum Behälter 109 hin öffnet.

Im in Fig. 4 gezeigten Beispiel führt jeweils direkt von der Pumpe 101 eine hydraulische Leitung 111,112 in die in der Figur linke Arbeitskammer 113,114 des Zylinders 103,104. Die rechten Arbeitskammern 115,116 sind in den gezeichneten stromlosen Positionen der Magnetventile 105,106 über die hydraulischen Leitungen 117,118 mit dem Behälter 109 verbunden. Wenn die Ventile 105,106 über die elektrischen Leitungen 119,120 angesteuert werden, können die rechten Arbeitskammern 115,116 gesperrt bzw. mit der Pumpe 108 verbunden werden.

Durch Prioritätsfestlegung in der elektronischen Kontrolleinheit 107 kann eine temporäre Nachrangigkeit eines der beiden Verbraucher sichergestellt werden, so daß es genügt, wenn die Pumpenförderleistung dem maximalen Verbrauch nur einer Einrichtung 101,102 entspricht. Um eine bestimmte Position beider Kolben 121,122 gleichzeitig oder wahlweise im Zylinder 103,104 einzustellen, wird an das Magnetventil 105,106 wahlweise ein Dauersignal oder ein pulsbreiten- bzw. pulspausenmoduliertes Signal angelegt. Für eine prioritätsbedingte Abschaltung, z.B. der Einrichtung 101 darf dann das Ventil 105 gar nicht bestromt werden oder es muß mittels evtl. vorhandenem Regelkreis dafür gesorgt werden, daß die Mittenstellung des Ventils gehalten wird. Ohne Risiko kann anstelle der Einrichtung 101 natürlich auch ein anderer sicherheitsrelevanter Verbraucher vorgesehen sein, dessen vorrangige Druckmittelversorgung ebenfalls durch elektronische Steuerung sichergestellt wird.

Die meisten Teile in Fig. 5 unterscheiden sich nicht von denen in Fig. 4. Es wird daher nur auf die Unterschiede eingegangen. Im Beispiel der Fig. 5 ist keine elektronische Prioritätssteuerung vorgesehen. Hinter der Pumpe 108 ist ein Stromteilerventil 123 angeordnet, wodurch beide Einrichtungen 101,102 gleichrangig mit Druckmittel versorgt werden. Diese Lösung bietet sich vor allem für gleichartige, gleichwichtige Verbraucher an. Zu berücksichtigen ist, daß die Förderleistung der Pumpe 108 dem gemeinsamen Maximalverbrauch beider Einrichtungen 101,102 entsprechen sollte. Dennoch zeichnet sich dieser Vorschlag dadurch aus, daß er besonders preiswert und einfach zu realisieren ist.

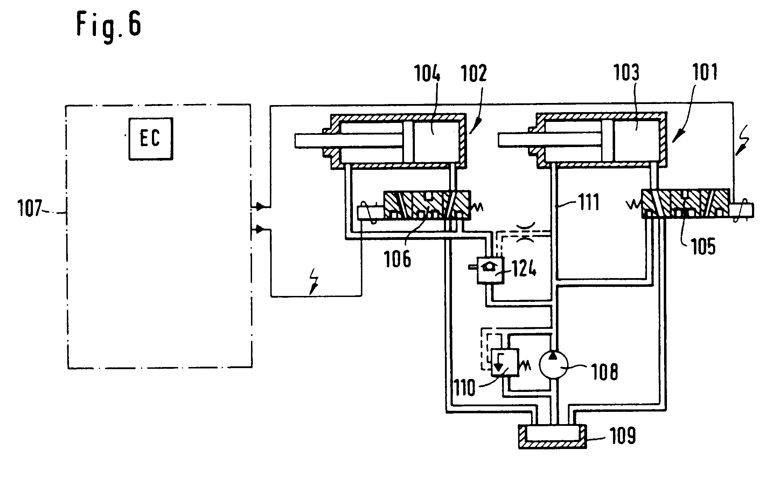

Bei dem in Fig. 6 gezeigten Ausführungsbeispiel wird die Einrichtung 101 vorrangig mit Druckmittel versorgt, da sie direkt an die Pumpe 108 angeschlossen ist. Die zweite Einrichtung 102 ist über ein vom Druck in der Leitung 111 entsperrbares Rückschlagventil 124 mit der Pumpe 108 verbunden. Auch ohne elektronische Prioritätssteuerung wird in diesem Fall die Einrichtung 101 vorrangig mit Druckmittel versorgt, d.h. an ihrer Stelle könnte ohne Risiko auch ein sicherheitsrelevanter Verbraucher vorgesehen sein.

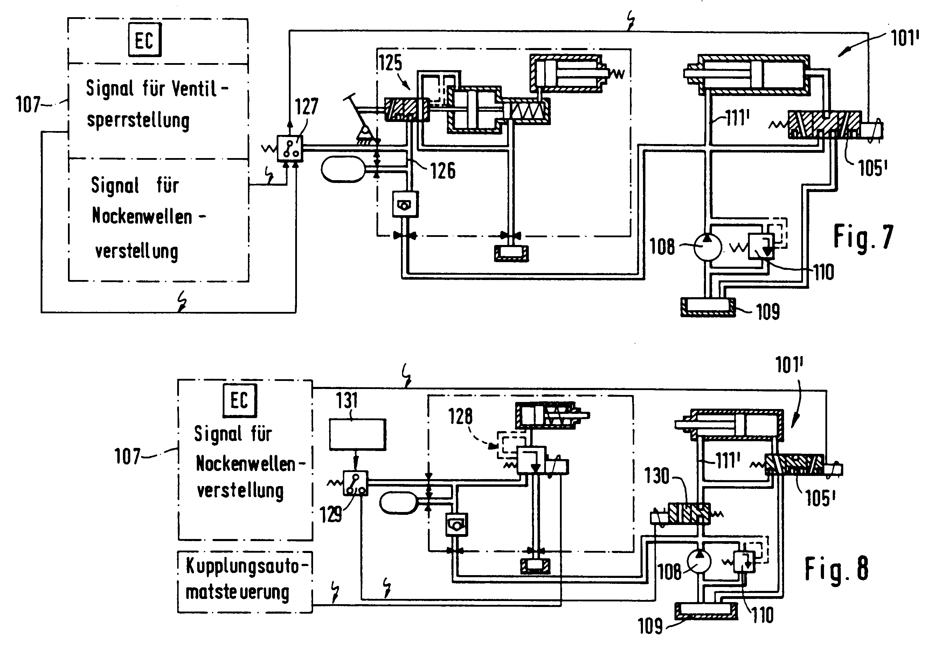

In Fig. 7 ist außer einer Einrichtung 101' zum Verstellen einer Nockenwelle als Verbraucher ein hydraulischer Kupplungsverstärker 125 dargestellt, auf den jedoch nicht weiter im Detail eingegangen wird. Letzterer stellt einen sicherheitsrelevanten Verbraucher dar. Vom Druck, der für die Kupplungsverstärkung in der Leitung 126 zur Verfügung steht, wird ein Druckschalter 127 beaufschlagt, der an das Magnetventil 105' entweder (bei genügend großem Systemdruck) das Signal für die Steuerung der Nockenwellenverstellung oder (bei zu geringem Druck im Kupplungsverstärker 125) ein Signal für die Sperrstellung zur Pumpe anlegt. Durch diese Maßnahme wird druckabhängig mit elektrohydraulischen Mitteln eine vorrangige Versorgung des sicherheitsrelevanten Verbrauchers gewährleistet.

In Fig. 8 ist als sicherheitsrelevanter Verbraucher ein Kupplungsautomat 128 gezeigt. Auch dessen Einzelheiten werden hier nicht erläutert. Der Kupplungsautomat 128 ist direkt an die Pumpe 108 angeschlossen und sein Systemdruck liegt an einem Druckschalter 129 an, der ein stromlos geschlossenes 2/2-Wegeventil 130 in der Leitung 111' zur Einrichtung 101' mit einer Spannungsquelle 131 verbinden kann. Auch hier ist von der Betätigung des Kupplungsautomaten druckabhängig eine vorrangige Versorgung des sicherheitsrelevanten Verbrauchers gewährleistet.

Mit der Erfindung werden in den Ausführungsbeispielen gemäß Fig. 4 und gemäß Fig. 6 bis 8 Hydraulikanlagen vorgeschlagen, die eine Mehrfachnutzung einer hydraulischen Pumpe 108 auch dann ermöglichen, wenn aus Sicherheitsgründen ein Verbraucher vorrangig mit Druckmittel versorgt werden muß. Die Variante nach Fig. 5 erlaubt eine gleichzeitige Versorgung zweier gleichrangiger Verbraucher. Die weiter oben angegebenen Vorteile, die sich aus der Benutzung der für die Nockenwellenverstelleinrichtung vorgesehenen Pumpe ergeben, werden in allen Fällen ausgenutzt.

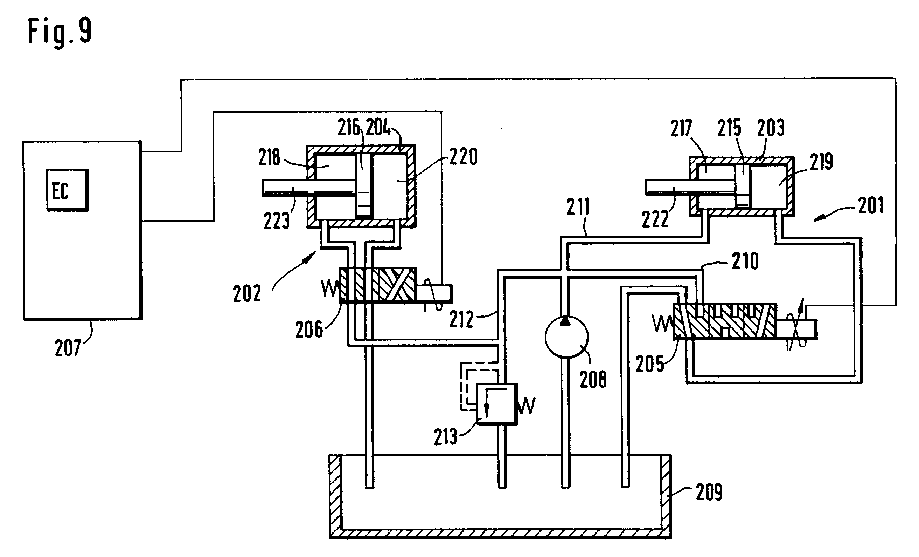

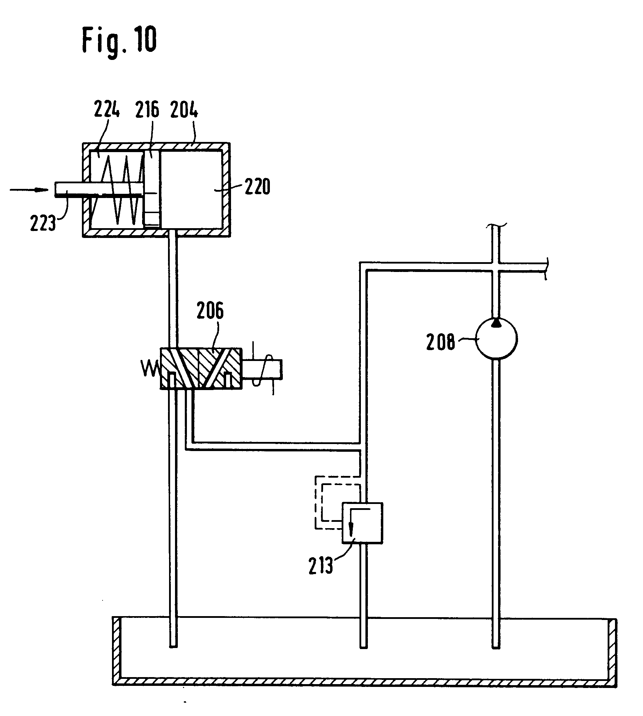

Von den beiden Figuren 9 und 10 zeigt Figur 9 eine Einrichtung 201 zum Verstellen der Einlaßnockenwelle und eine Einrichtung 202 zum Verstellen der Auslaßnockenwelle gezeigt. Jede Einrichtung 201,202 besteht aus einem doppelt wirkenden hydraulischen Zylinder 203,204 und einem elektrisch ansteuerbaren Magnetventil 205,206. Die Magnetventile 205,206 werden von einer gemeinsamen elektronischen Kontrolleinheit 207 gesteuert. Diese kann beispielsweise Bestandteil des erweiterten elektronischen Motormanagements sein.

Die Einrichtung 201 zum Verstellen der Einlaßnockenwelle ist mit einem Proportionalventil 205 und mit einem hydraulischen Zylinder 203 mit kleiner Querschnittsfläche ausgerüstet, und die Einrichtung 202 zum Verstellen der Auslaßnockenwelle ist mit einem Zweistellungsmagnetventil 206 sowie einem hydraulischen Zylinder 204 mit großer Querschnittsfläche ausgerüstet. Durch diese Maßnahme kann die Einrichtung 202 auf niedrigerem Druckniveau als die Einrichtung 201 arbeiten.

Beide Einrichtungen 201,202 werden von einer gemeinsamen hydraulischen Pumpe 208 mit Druckmittel versorgt. Die Pumpe 208 saugt aus einem drucklosen Behälter 209 Druckmittel an und fördert dies über hydraulische Leitungen 210,211 und 212 zum Proportionalventil 205, zum hydraulischen Zylinder 203 sowie zum Zweistellungsventil 206 und von dort zum hydraulischen Zylinder 204. An die Leitung 212 ist noch ein Druckbegrenzungsventil 213 angeschlossen, welches zum Behälter 209 hin öffnet.

In den dargestellten Ventilpositionen der Ventile 205 und 206 bewegen sich die Kolben 215 und 216 der Zylinder 203 und 204 in der Zeichnung nach rechts, da jeweils die linken Arbeitskammern 217 und 218 mit der Pumpe 208 verbunden und druckbeaufschlagt sind und die rechten Arbeitskammern 219 und 20 beide mit dem Behälter 209 verbunden und somit drucklos sind. Wird das Zweistellungsventil 206 umgeschaltet, so wird die rechte Arbeitskammer 220 mit Druck beaufschlagt und die linke Arbeitskammer 218 mit dem Behälter 209 verbunden, so daß sich der Kolben 216 nach links verschiebt. Je nach Stellung des Zweistellungsventils 206 bleibt der Kolben 216 in seiner linken oder rechten Endposition stehen.

Je nach Position des Proportionalventils 205 kann der Kolben 215 in jeder beliebigen Stellung festgehalten werden. In der Mittelstellung des Ventils 205 bleibt der Kolben 215 stehen, da die rechte Arbeitskammer 219 hydraulisch gesperrt ist, und in der Position des Ventils 205, in der beide Arbeitskammern 217 und 219 mit der Pumpe 208 verbunden sind, bewegt sich der Kolben 215 nach links, da die rechte Kolbenfläche größer ist als die linke.

Während nun in Fig. 9 die Kolbenstange 223 entsprechend der Bewegungsrichtung des ersten Kolbens die Auslaßnockenwelle in beiden Richtungen zu verstellen vermag, ist in Fig. 10 auszugsweise eine andere Art der Verstellmöglichkeit der Auslaßnockenwelle durch den Kolben 16 dargestellt.

Fig. 10 zeigt einen Auszug von Fig. 9, der im wesentlichen die Betätigung der Auslaßnockenwelle über die Kolbenstange 223 mittels des Kolbens 216 betrifft. Dabei werden die in Fig. 10 gezeigten Baugruppen nur insoweit erläutert, als sie eine zu Fig. 9 abweichende Arbeitsweise haben.

In Fig. 10 besitzt der zweite Kolben 216 eine in der Zeichnung nach rechts gerichtete Vorspannung mittels einer Feder 224. Der zweite Kolben 216 wandert also nach rechts, sobald die von der Feder ausgeübte Kraft die durch den Druck in der Arbeitskammer 220 ausgeübte Kraft überwiegt.

Durch eine derartige Ausgestaltung des Stellzylinders ergibt sich eine einfach wirkende Arbeitsweise. Dabei kann für die einfahrende Bewegungsrichtung die von der Nockenwelle über die Kolbenstange 223 ausgehende Kraft im Zusammenwirken mit der Feder 224 ausgenutzt werden.

Durch diese Maßnahme ergibt sich eine vereinfachte Ausgestaltung des Ventils 206, indem, im Vergleich zu Fig. 9, auf zwei Durchgangsöffnungen zum Durchlaß des Steuermittels verzichtet werden kann. Darüberhinaus zeigt der Vergleich, daß man mit der Anordnung nach Fig. 10 auf eine zweite Verbindungsleitung zwischen Zylinder 204 und Ventil 206 verzichten kann.

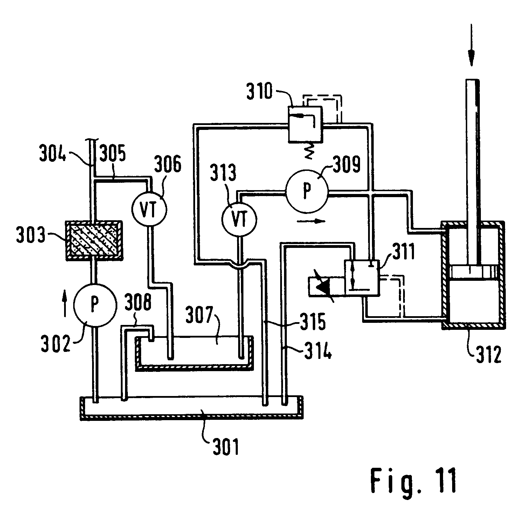

Fig. 11 zeigt einen Teil des Schmierkreislaufs eines Verbrennungsmotors mit einer Schmiermittelwanne 301, eine Schmierdruckpumpe 302, einem Filter 303 und einer Schmierdruckleitung 304. Von der Schmierdruckleitung 304 zweigt eine Förderleistung 305 mit einer Drosselblende 306 ab, die in ein Zwischenreservoir 307 mit einem Überlauf 308 mündet. Das Zwischenreservoir 207 ist Teil einer Hydraulikanlage, die eine sauggeregelte Hydraulikpumpe 309, ein Druckbegrenzungsventil 310, ein elektromagnetisch betätigbares Steuerventil 311 und einen Stellzylinder 312 umfaßt. Die Saugseite der Hydraulikpumpe 309 ist über eine Drosselblende 313 zur Saugregelung der Fördermenge an das Zwischenreservoir 307 angeschlossen. Die Druckseite der Hydraulikpumpe 309 steht unmittelbar mit der Kolbenstangenseite des Stellzylinders 312 in Verbindung. Zur Ausführung von Stellbewegungen wird die kolbenstangenfreie Seite des Stellzylinders 312 durch das Steuerventil 311 entweder mit der Druckseite der Hydraulikpumpe 309 oder über eine Rücklaufleitung 314 mit der Schmiermittelwanne 301 verbunden. In der Ruhestellung ist das Steuerventil 311 gesperrt und der Kolben des Stellzylinders 312 wird in der jeweils erreichten Stellung gehalten. Vom Druckbegrenzungsventil 310 führt ebenfalls eine Rücklaufleitung 315 zur Schmiermittelwanne 301.

Mit der beschriebenen hydraulischen Anlage läßt sich der Schmierkreislauf eines Verbrennungsmotors trotz seiner durch die Motordrehzahl und die Betriebstemperatur erhebliche Schwankung des Betriebsdrucks vorteilhaft nutzen, um eine vom Verbrennungsmotor angetriebenen Hydraulikpumpe 309 mit Betriebsmittel zu versorgen. Das drucklose Zwischenreservoir 307 ermöglicht eine Saugdruckregelung der Hydraulikpumpe 309, so daß die Fördermenge der Hydraulikpumpe 309 auf einfache und verlustarme Weise trotz großer Drehzahlschwankungen des Pumpenantriebs auf einen geeigneten Maximalwert begrenzt werden kann.

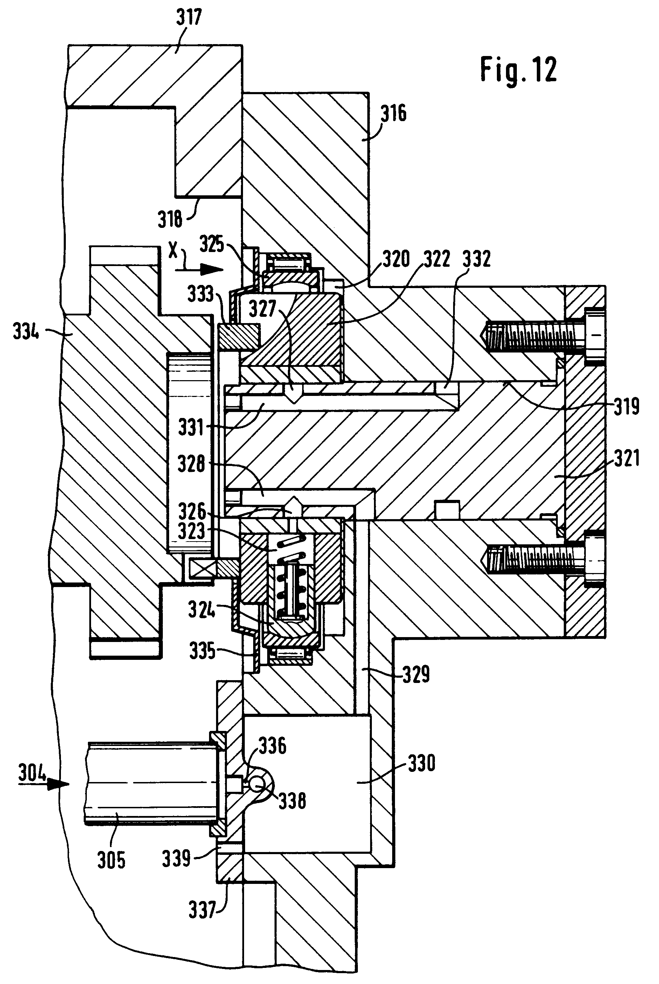

In Fig. 12 ist eine für die beschriebene Hydraulikanlage geeignete Ausführung einer Hydraulikpumpe 309 dargestellt. Die als Radialkolbenpumpe ausgebildete Hydraulikpumpe 309 weist ein im wesentlichen scheibenförmiges Pumpengehäuse 316 auf, das an das Motorgehäuse 317 eines Verbrennungsmotors angeflanscht ist und eine Öffnung 318 im Motorgehäuse 317 nach außen verschließt. Das Pumpengehäuse 316 weist eine durchgehende Längsbohrung 319 und eine sich daran anschließende zylindrische Ausnehmung 320 auf. In der Längsbohrung 319 ist ein Steuerzapfen 321, beispielsweise durch Einpressen, befestigt, der in die Ausnehmung 320 hineinragt. Auf dem Steuerzapfen 321 ist in der Ausnehmung 320 ein Rotor 322 drehbar gelagert, in dem mehrere, radial ausgerichtete Zylinderbohrungen 323 ausgebildet sind, in denen Kolben 324 gleiten. Die Kolben 324 stützen sich mit ihren radial äußeren Enden an der Innenfläche eines Hubrings 325 ab, der mittels eines Wälzlagers exzentrisch zum Steuerzapfen 21 in der Ausnehmung 320 drehbar gelagert ist. Im Steuerzapfen 321 sind in der Ebene der Zylinderbohrungen 323 Steuerschlitze 326,327 ausgebildet, die bei Drehung 322 nacheinander über radiale Anschlußbohrungen mit den einzelnen Zylinderbohrungen 323 in Verbindung treten. Der Steuerschlitz 326 befindet sich im Saugbereich der Kolben 324 und ist an einen in Längsrichtung im Steuerzapfen 321 verlaufenden Saugkanal 328 angeschlossen. Über eine Ansaugbohrung 329 ist der Saugkanal 328 mit einem Zwischenreservoir 330 verbunden, das durch eine Kammer des Gehäuses 316 gebildet wird. Der Steuerschlitz 327 liegt im Druckbereich der Kolben 324 und ist über einen parallel zum Saugkanal 328 im Steuerzapfen 321 ausgebildeten Druckkanal 331 mit einer Ringnut 332 verbunden, von der außerhalb der Zeichnungsebene eine Bohrung zu einem Druckanschluß der Hydraulikpumpe führt.

Der Rotor 322 wird über eine Kupplung 333 von einer Welle 334, z.B. der Nockenwelle des Verbrennungsmotors angetrieben. Die Kupplung 333 besteht aus einem Ring mit axialen Zapfen. Radial außerhalb der Kupplung 333 ist die Ausnehmung 320 durch eine aus einem dünnen Blech geformte Stauscheibe 335 verschlossen, die in die Ausnehmung 320 eingepreßt ist und an einer Stufenfläche der Ausnehmung 320 anliegt. Die Stauscheibe 335 umschließt den radial äußeren Bereich des Rotors 322 und dient für diesen wie auch für den Hubring 325 als Anlaufscheibe zur Begrenzung der Bewegung in axialer Richtung. Durch die Stauscheibe 335 wird das Betriebsmittel zurückgehalten, welches infolge Leckage an den Kolben 324 und am Steuerzapfen 321 entweicht. Hierdurch sind die radial äußeren Enden der Zylinderbohrungen 323 von Betriebsmedium bedeckt und es wird verhindert, daß bei steigendem Saugunterdruck bei Einsetzen der Saugdruckregelung über den Kolbenspalt Luft angesaugt werden kann. Überschüssiges Betriebsmedium kann durch die zentrale Bohrung für die Kupplung 333 in das Motorgehäuse 317 ablaufen.

Das Zwischenreservoir 330 ist in der Zeichnung im Querschnitt dargestellt und erstreckt sich im wesentlichen senkrecht zur Zeichnungsebene. Die Ansaugbohrung 329 mündet in das Zwischenreservoir 330 in Bodennähe. Oberhalb der Ansaugbohrung 329 wird dem Zwischenreservoir 330 über die von der Schmierdruckleitung 304 abgezeigte Förderleitung 305 Betriebsmittel zugeführt. Die Förderleitung 305 steht mit dem Zwischenreservoir 330 über eine Drosselblende 336 in Verbindung, die in einem Deckel 337 des Zwischenreservoirs 330 vorgesehen ist. Durch eine Querbohrung 338 wird der aus der Drosselblende 336 austretende Betriebsmittelstrom um 90^{o} zum Boden des Zwischenreservoirs 330 hin umgelenkt. Durch die Drosselblende 336 wird in dem Zwischenreservoir 330 zugeführte Betriebsmittelmenge begrenzt. Oberhalb der Drosselblende 336 und seitlich versetzt zu dieser befindet sich in dem Deckel 337 eine Überlaufbohrung 339, durch die überschüssiges Betriebsmittel aus dem Zwischenreservoir 330 zum Innenraum des Motorgehäuses 317 hin abfließen kann. Die Überlaufbohrung 339 ist so hoch über der Ansaugbohrung 329 angeordnet, daß bei allen Betriebsbedingungen, die bei einem Einbau des Verbrennungsmotors in ein Fahrzeug auftreten können, wie Bremsen, Beschleunigen, Kurvenfahrt, Schütteln, Schräglagen, die Ansaugbohrung 329 immer mit Betriebsmittel bedeckt bleibt. Auch die Drosselblende 336 ist so hoch angeordnet, daß das Zwischenreservoir 330 bei abgestelltem Motor und unterbrochener Schmierdruckzuführung gefüllt bleibt und nicht über die Förderleistung 305 leerlaufen kann.

Die beschriebene Hydraulikanlage und die Hydraulikpumpe eigenen sich vor allem für eine Anwendung in Personen- und Lastwagen sowie in selbstfahrenden und stationären Arbeitsmaschinen. Eine bevorzugte Anwendung sind hydraulische Verstelleinrichtungen für die Steuerung des Verbrennungsmotors, beispielsweise zum Verstellen der Nockenwelle.

## Patentansprüche

1. Hydraulikanlage mit einer von einem Verbrennungsmotor angetriebenen Hydraulikpumpe, deren Fördermenge durch Saugdrosselung geregelt wird, wobei von der Pumpe eine erste und mindestens eine zweite Einrichtung mit Druckmittel versorgt wird, dadurch **gekennzeichnet**, daß die erste und die zweite Einrichtung sogenannte variable Nockenwellenverstelleinrichtungen (6,101,102) sind, die beide hydraulisch gleichrangig angeschlossen sind und je ein elektrisch ansteuerbares Magnetventil (105,106,105') aufweisen.

2. Hydraulikanlage nach Anspruch 1, dadurch **gekennzeichnet**, daß eine elektrische oder elektronische Kontrolleinheit (107) die Magnetventile (105,106,105') in Abhängigkeit vom Druckmittelbedarf und der möglichen Pumpenförderleistung so steuert, daß eine der beiden Einrichtungen (101,102,101') zumindest zeitweise nachrangig versorgt wird. (Fig. 4,7)

3. Hydraulikanlage nach Anspruch 1, dadurch **gekennzeichnet**, daß die zweite Einrichtung zur Nockenwellenverstellung direkt und die erste Einrichtung zur Nockenwellenverstellung (102,101') unter Zwischenschaltung eines vom Druck in der zweiten Einrichtung zur Nockenwellenverstellung (101) beaufschlagten entsperrbaren Rückschlagventils (124) an die Pumpe (108) angeschlossen ist. (Fig. 6)

4. Hydraulikanlage nach Anspruch 2, dadurch **gekennzeichnet**, daß beide Einrichtungen (101,102) hydraulisch gleichrangig unter Zwischenschaltung eines Stromteilerventils (123) angeschlossen sind. (Fig. 5)

5. Hydraulikanlage nach Anspruch 1, dadurch **gekennzeichnet**, daß die eine Einrichtung über ein Proportionalregelventil (205) und die andere Einrichtung über ein Zweistellungsventil (206) angeschlossen ist. (Fig. 9)

6. Hydraulikanlage nach Anspruch 5, dadurch **gekennzeichnet**, daß über das Proportionalventil (205) die Einrichtung (201) zur Verstellung der die Einlaßventile betätigen- den Nockenwelle und über das Zweistellungsventil (206) die Einrichtung (202) zur Verstellung der die Auslaßventile betätigenden Nockenwelle angeschlossen ist, oder daß von den beiden Einrichtungen zwei die Einlaßventile bzw. die Auslaßventile betätigenden Nockenwellen gesteuert werden. (Fig. 9)

7. Hydraulikanlage nach Anspruch 5 oder 6, dadurch **gekennzeichnet**, daß in dem als hydraulischer Stellzylinder ausgestalteten Antriebssystem (220), das über das Zweistellungsventil (206) angeschlossen ist, ein niedrigerer Antriebsdruck benötigt wird als in dem Antiebssystem (219), welches das Proportionalregelventil (205) ansteuert.

8. Hydraulikanlage nach einem der Ansprüche 5 - 7, dadurch **gekennzeichnet**, daß das Zweistellungsventil ein Dreiwege-Zweistellungsventil (206) ist.

9. Hydraulikanlage nach einem der Ansprüche 5 - 8, dadurch **gekennzeichnet**, daß der Kolben zur Verstellung der die Auslaßventile steuernden Nockenwelle mittels einer Feder (224) in Einfahrrichtung des Kolbens (216) vorgespannt ist. (Fig. 10)

10. Hydraulikanlage nach einem der Ansprüche 1 bis 9, dadurch **gekennzeichnet**, daß als weiterer, insbesondere sicherheitsrelevanter Verbraucher ein hydraulischer Stellzylinder (21) einer hydraulischen Hilfskraftlenkung (5), einer Fahrwerksregelung, eines Kupplungsverstärkers oder eines Kupplungsautomaten vorgesehen ist.

11. Hydraulikanlage nach einem der Ansprüche 1 - 10, dadurch **gekennzeichnet**, daß die Pumpe (1,31) als vorzugsweise innenbeaufschlagte Radialkolbenpumpe (1) mit mindestens zwei voneinander unabhängigen Pumpenkreisen (4.7;34,37) ausgebildet ist, wobei jedem Kreis mindestens eine Einrichtung zugeordnet ist.

12. Hydraulikanlage nach Anspruch 11, dadurch **gekennzeichnet**, daß die Pumpe (1,31) als Mehrkolbenpumpe mit nur einem Kolbenstern ausgebildet ist, wobei mehrere Kolben (2,3) jeweils zu einem Pumpenkreis (4,7) zusammengeschaltet sind.

13. Hydraulikanlage nach Anspruch 11, dadurch **gekennzeichnet**, daß die Pumpe (1,31) mehrere Kolbensterne (1;31) aufweist, die von einer gemeinsamen Antriebswelle angetrieben werden, wobei jeder Kolbenstern (1;31) mit mindestens einem Pumpenkreis (4,7;34,37) Druckmittel zu einer zugeordneten Einrichtung fördert.

14. Hydraulikanlage nach einem der Ansprüche 11 bis 13, dadurch **gekennzeichnet**, daß jeder Einrichtung und insbesondere jedem sicherheitsrelevanten Verbraucher (5) ein eigener Pumpenkreis (4,7;34,37) zugeordnet ist.

15. Hydraulikanlage nach einem der Ansprüche 11 - 13, dadurch **gekennzeichnet**, daß ein Pumpenkreis (4) mehreren vorzugsweise gleichgeordneten Einrichtungen zugeordnet ist, die zueinander vorzugsweise parallel geschaltet sind, wobei die beiden Einrichtungen bevorzugt gleichgeordnet sind.

16. Hydraulikanlage nach Anspruch 14, dadurch **gekennzeichnet**, daß eine Prioritätsschaltung dafür sorgt, daß die zweite Einrichtung als sicherheitsrelevanter Verbraucher vorrangig mit Druckmittel versorgt wird.

17. Hydraulikanlage nach einem der vorhergehenden Ansprüche, dadurch **gekennzeichnet**, daß die Pumpe (1,31) im bzw. am Motorgehäuse, vorzugsweise im bzw. am Zylinderkopfgehäuse des Verbrennungsmotors angeordnet ist.

18. Hydraulikanlage nach einem der Ansprüche 1 - 17, dadurch **gekennzeichnet**, daß das Pumpengehäuse (316) eine Öffnung (318) im Motorgehäuse (317) nach außen verschließt, durch die die Hydraulikpumpe (309) mit einer Antriebswelle (334) des Verbrennungsmotors gekuppelt und an den Schmierkreislauf angeschlossen ist.

19. Hydraulikanlage nach einem der Ansprüche 17 oder 18, dadurch **gekennzeichnet**, daß die Pumpe (1;31) mittelbar - etwa durch Zahnräder und/oder eine Kette und/oder einen Zahnriemen - oder unmittelbar durch die Nockenwelle oder auch die Kurbelwelle angetrieben wird.

20. Hydraulikanlage nach einem der Ansprüche 1 - 19, dadurch **gekennzeichnet**, daß die Saugseite der Hydraulikpumpe (309) an einem Zwischenreservoir (307,330) mit freiem Überlauf (308,339) angeschlossen ist, in das von der Schmierdruckpumpe (302) des Verbrennungsmotors Betriebsmedium aus dem Schmierkreislauf (304) gefördert wird, wobei der Rücklauf (314,315) aus der Hydraulikanlage in die Schmiermittelwanne (301) des Verbrennungsmotors mündet.

21. Hydraulikanlage nach Anspruch 20, dadurch **gekennzeichnet**, daß in der Förderleitung (305) vom Schmierkreislauf zum Zwischenreservoir (307,330) eine Drosselblende (306,336) vorgesehen ist.

22. Hydraulikanlage nach einem der Ansprüche 1 - 21, dadurch **gekennzeichnet**, daß die Fördermenge der Hydraulikpumpe (309) durch eingangsseitige Saugdrosselung geregelt wird.

23. Hydraulikanlage nach einem der Ansprüche 20 - 22, dadurch **gekennzeichnet**, daß das Zwischenreservoir (330) durch eine Kammer im Gehäuse (316) der Hydraulikpumpe (309) gebildet ist, in die der Saugkanal (328) der Hydraulikpumpe (309) mündet und die an eine Förderleitung (305) des Schmierkreislaufs angeschlossen ist und die eine mit dem Innenraum des Verbrennungsmotors verbundene Überlaufbohrung (339) hat.

24. Hydraulikanlage nach einem der Ansprüche 1 - 23, dadurch **gekennzeichnet**, daß die Hydraulikpumpe (309) eine innenbeaufschlagte Radialkolbenpumpe mit einer im Pumpengehäuse (316) ausgebildeten, zum Motorgehäuse (317) offenen Ausnehmung (320) ist, in der der Rotor (322) angeordnet ist und die zum Motorgehäuse (317) hin durch eine zumindest im radial äußeren Bereich den Rotor (322) von außen überdeckende Stauscheibe (335) verschlossen ist, die eine zentrale Öffnung für die den Rotor (322) mit der Antriebswelle (334) verbindende Kupplung (333) aufweist.

## Claims

1. A hydraulic unit with a hydraulic pump which is driven by an internal-combustion engine and whose delivery rate is controlled by suction throttling, a first device and at least one second device being supplied with hydraulic pressure fluid by said pump, **characterized** in that the said first device and the said second device are so-called variable camshaft adjusting devices (6, 101, 102) which are both equally connected hydraulically and are each furnished with one electrically actuatable solenoid valve (105, 106, 105').

2. A hydraulic unit as claimed in claim 1, **characterized** in that an electric or an electronic control unit (107) actuates said solenoid valves (105, 106, 105') depending on the hydraulic pressure fluid demand and on the potential pump delivery rate, in such a manner that one of the said two devices (101, 102, 101') is at least temporarily supplied with hydraulic pressure fluid posteriorily. (Figures 4, 7).

3. A hydraulic unit as claimed in claim 1, **characterized** in that the said second device for the camshaft adjustment is connected to the said pump (108) directly and the said first device for the camshaft adjustment connected interposing an unlockable non-return valve (124) which is subject to the pressure within the said second device for the camshaft adjustment (101). (Figure 6)

4. A hydraulic unit as claimed in claim 2, **characterized** in that both said devices (101, 102) are equally connected hydraulically, interposing a flow divider valve (123). (Figure 5)

5. A hydraulic unit as claimed in claim 1, **characterized** in that the one said device is connected through a proportional control valve (205) and the other said device through a two-position valve (206). (Figure 9)

6. A hydraulic unit as claimed in claim 5, **characterized** in that through the said proportional valve (205) the device (201) for the adjustment of the camshaft actuating the inlet valves and through the said two-position valve (206) the device (202) for the adjustment of the camshaft actuating the outlet valves, or characterized in that by the said two devices two camshafts are controlled which actuate the inlet valves or the outlet valves, respectively. (Figure 9)

7. A hydraulic unit as claimed in claims 5 or 6, **characterized** in that within the driving system (220) configured as a hydraulic operating cylinder which is connected through the said two-position valve (206) a lower driving pressure is required than in the driving system (219) which actuates the said proportional control valve (205).

8. A hydraulic unit as claimed in anyone of claims 5 to 7, **characterized** in that the said two-position valve is a three-way two-position valve (206).

9. A hydraulic unit as claimed in anyone of claims 5 to 8, **characterized** in that the piston for the adjustment of the camshaft actuating the outlet valves is prestressed in the retracting direction of the piston (216) by means of a spring (224). (Figure 10)

10. A hydraulic unit as claimed in anyone of claims 1 to 9, **characterized** in that as a further consumer, in particular as a consumer having importance under safety aspects, a hydraulic operating cylinder (21) of a hydraulic power steering system (5), of a chassis control system, of a clutch booster or of an automatic clutch is provided.

11. A hydraulic unit as claimed in anyone of claims 1 to 10, **characterized** in that the said pump (1, 31) is preferably configured as an internally pressurized radial piston pump (1) with at least two pump circuits (4.7; 34, 37) being independent of each other, at least one said device being associated with each said circuit.

12. A hydraulic unit as claimed in claim 11, **characterized** in that said pump (1, 31) is configurated as a multiple-piston pump with one piston star only, a plurality of pistons (2, 3) being grouped together in each instance to form one each said pump circuit (4, 7).

13. A hydraulic unit as claimed in claim 11, **characterized** in that the said pump (1, 31) is furnished with a plurality of said piston stars (1; 31) which are driven by a common driving shaft, each said piston star (1; 31) with at least one said pump circuit (4, 7; 34, 37) delivering hydraulic pressure fluid to one said associated device.

14. A hydraulic unit as claimed in anyone of claims 11 to 13, **characterized** in that with each said device and in particular with each consumer (5) having importance under safety aspects one own said pump circuit (4, 7; 34, 37) is associated.

15. A hydraulic unit as claimed in anyone of claims 11 to 13, **characterized** in that one said pump circuit (4) is associated with a plurality of preferably equal said devices which are preferably connected in parallel to one another, the said two devices being preferably equal to each other.

16. A hydraulic unit as claimed in claim 14, **characterized** in that a priority connection takes care that the second said device as a consumer having importance under safety aspects is given preference in the supply of hydraulic pressure fluid.

17. A hydraulic unit as claimed in anyone of the preceding claims, **characterized** in that the said pump (1, 31) in or at the engine casing, respectively, is preferably positioned in or at the cylinder head casing, respectively, of the internal-combustion engine.

18. A hydraulic unit as claimed in anyone of claims 1 to 17, **characterized** in that the pump casing (316) closes an opening (318) in the said engine casing (317) toward the outside through which the said hydraulic pump (309) is coupled to a driving shaft (334) of the internal-combustion engine and is connected to the lubricating circuit.

19. A hydraulic unit as claimed in anyone of claims 17 or 18, **characterized** in that the said pump (1; 31) is driven either directly - such as by gearwheels and/or by a chain and/or by a toothed belt - or directly by the camshaft or, else, by the crankshaft.

20. A hydraulic unit as claimed in anyone of claims 1 to 19, **characterized** in that the suction side of the said hydraulic pump (309) is connected to an intermediate reservoir (307, 330) with free overflow (308, 339) into which former operating fluid is delivered by the lubricating pressure pump (302) of the internal-combustion engine from the lubricating circuit (304), the reflux (314, 315) from the hydraulic unit ending up in the lubricant sump (301) of the internal-combustion engine.

21. A hydraulic unit as claimed in claim 20, **characterized** in that the delivery line (305) going from the said lubricating circuit to the said intermediate reservoir (307, 330) a restrictor orifice (306) is provided.

22. A hydraulic unit as claimed in anyone of claims 1 to 21, **characterized** in that the delivery rate of the said hydraulic pump (309) is contolled by inlet-side suction throttling.

23. A hydraulic unit as claimed in anyone of claims 20 to 22, **characterized** in that the said intermediate reservoir (330) is formed by a chamber in the housing (316) of the said hydraulic pump (309) in which the suction duct (328) of the said hydraulic pump (309) ends up and which is connected to a delivery line (305) of the said lubricating circuit and which is furnished with an overflow bore (339) being connected to the interior space of the internal-combustion engine.

24. A hydraulic unit as claimed in anyone of claims 1 to 23, **characterized** in that the said hydraulic pump (309) is an internally pressurized radial piston pump with a recess (320) being configured in the said pump housing (316) and being open in the direction of the said engine casing (317), within which said recess the rotor (322) is positioned and which is closed toward the said engine casing (317) by an orifice disc (335) which covers the said rotor (322) from outside at least in the radially external range and which is formed with a central opening for the coupling (333) connecting the said rotor (322) to the driving shaft (334).

## Revendications

1. Système hydraulique comportant une pompe hydraulique qui est entraînée par un moteur à combustion interne et dont le débit est réglé au moyen d'un étranglement d'aspiration, dans lequel un premier dispositif et au moins un second dispositif sont alimentés par la pompe en agent de pression, caractérisé en ce que le premier dispositif et le second dispositif sont ce qu'il est convenu d'appeler des dispositifs de réglage d'arbre à cames de type variable (6, 101, 102) qui présentent l'un et l'autre un raccordement hydraulique de même rang et comprennent chacun une valve à solénoïde à commande électrique (105, 106, 105').

2. Système hydraulique selon la revendication 1, caractérisé en ce qu'un contrôleur électrique ou électronique (107) commande les valves à solénoïde (105, 106, 105') en fonction du besoin en agent de pression et de la capacité de refoulement possible de la pompe, d'une façon telle que l'un des deux dispositifs (101, 102, 101') est alimenté au moins par périodes suivant un rang non prioritaire (figures 4 et 7).

3. Système hydraulique selon la revendication 1, caractérisé en ce que le second dispositif de réglage d'arbre à cames est raccordé directement à la pompe (108) et le premier dispositif de réglage d'arbre à cames (102, 101') est raccordé à cette pompe (108) moyennant l'interposition d'une valve antiretour (124) pilotée qui est soumise à l'action de la pression régnant dans le second dispositif de réglage d'arbre à cames (101) (figure 6).

4. Système hydraulique selon la revendication 2, caractérisé en ce que les deux dispositifs (101, 102) sont raccordés hydrauliquement suivant le même rang moyennant l'interposition d'une valve diviseur de débit (123) (figure 5).

5. Système hydraulique selon la revendication 1, caractérisé en ce qu'un premier dispositif est raccordé par l'intermédiaire d'une valve de régulation de type proportionnel (205) et l'autre dispositif est raccordé par l'intermédiaire d'une valve à 2 positions (206) (figure 9).

6. Système hydraulique selon la revendication 5, caractérisé en ce que le dispositif (201) de réglage de l'arbre à cames actionnant les valves d'entrée est raccordé par l'intermédiaire de la valve proportionnelle (205) et le dispositif (202) de réglage de l'arbre à cames actionnant les valves de sortie est raccordé par l'intermédiaire de la valve à 2 positions (206), ou en ce que deux arbres à cames actionnant respectivement les valves d'entrée et les valves de sortie sont commandés par les deux dispositifs (figure 9).

7. Système hydraulique selon l'une des revendications 5 et 6, caractérisé en ce qu'une pression d'entraînement plus faible est nécessaire dans le système d'entraînement (220), réalisé sous la forme d'un vérin hydraulique de réglage, qui est raccordé par l'intermédiaire de la valve à 2 positions (206), que dans le système d'entraînement (219) que commande la valve de régulation de type proportionnel (205).

8. Système hydraulique selon l'une des revendications 5 à 7, caractérisé en ce que la valve à 2 positions est une valve à 3 voies/2 positions (206).

9. Système hydraulique selon l'une des revendications 5 à 8, caractérisé en ce que le piston servant au réglage de l'arbre à cames commandant les valves de sortie est soumis à une précontrainte dans le sens de rentrée du piston (216) au moyen d'un ressort (224) (figure 10).

10. Système hydraulique selon l'une des revendications 1 à 9, caractérisé en ce que, comme autre utilisateur, notamment important en ce qui concerne la sécurité, il est prévu un vérin hydraulique (21) de réglage d'une direction assistée hydraulique (5), d'une régulation de niveau, d'un amplificateur d'embrayage ou d'un embrayage automatique.

11. Système hydraulique selon l'une des revendications 1 à 10, caractérisé en ce que la pompe (1, 31) est réalisée sous la forme d'une pompe à pistons plongeurs radiaux (1), de préférence soumise à une action intérieure, qui comporte au moins deux circuits de pompe (4, 7 ; 34, 37) indépendants l'un de l'autre, au moins un dispositif étant associé à chaque circuit.

12. Système hydraulique selon la revendication 11, caractérisé en ce que la pompe (1, 31) est réalisée sous la forme d'une pompe à plusieurs pistons plongeurs ne comportant qu'un agencement en étoile de pistons plongeurs, plusieurs pistons plongeurs (2, 3) étant montés dans chacun des circuits de pompe (4, 7).

13. Système hydraulique selon la revendication 11, caractérisé en ce que la pompe (1, 31) comporte plusieurs agencements en étoile de pistons plongeurs (1 ; 31) qui sont entraînés par un arbre commun d'entraînement, chaque agencement en étoile de pistons plongeurs (1 ; 31) envoyant de l'agent de pression à un dispositif associé à l'aide d'au moins un circuit de pompe (4, 7 ; 34, 37).

14. Système hydraulique selon l'une des revendications 11 à 13, caractérisé en ce qu'à chaque dispositif, et notamment à chaque utilisateur (5) important en ce qui concerne la sécurité, il est associé un circuit de pompe (4, 7 ; 34, 37) qui lui est propre.

15. Système hydraulique selon l'une des revendications 11 à 13, caractérisé en ce qu'un circuit de pompe (4) est associé à plusieurs dispositifs, de préférence de même rang, qui sont montés de préférence en parallèle entre eux, les deux dispositifs étant de préférence de même rang.

16. Système hydraulique selon la revendication 14, caractérisé en ce qu'un circuit de priorité est prévu pour permettre que le second dispositif soit alimenté en premier rang en agent de pression, en tant qu'utilisateur important en ce qui concerne la sécurité.

17. Système hydraulique selon l'une des revendications précédentes, caractérisé en ce que la pompe (1, 31) est disposée dans ou sur le carter du moteur, de préférence dans ou sur le carter de tête de culasse du moteur à combustion interne.

18. Système hydraulique selon l'une des revendications 1 à 17, caractérisé en ce que le boîtier de pompe (316) obture vis-à-vis de l'extérieur une ouverture (318) qui est ménagée dans le carter (317) du moteur et par laquelle la pompe hydraulique (309) est accouplée à un arbre d'entraînement (334) du moteur à combustion interne et est raccordée au circuit de lubrification.

19. Système hydraulique selon l'une des revendications 17 et 18, caractérisé en ce que la pompe (1 ; 31) est entraînée au moyen de l'arbre à cames, ou aussi du vilebrequin, soit indirectement, par exemple par l'intermédiaire d'engrenages et/ou d'une chaîne et/ou d'une courroie dentée, soit directement.

20. Système hydraulique selon l'une des revendications 1 à 19, caractérisé en ce que le côté d'aspiration de la pompe hydraulique (309) est raccordé à un réservoir intermédiaire (307, 330) comportant un trop-plein libre (308, 339), dans lequel du fluide de fonctionnement est refoulé hors du circuit de lubrification (304) par la pompe de pression de lubrification (302) du moteur à combustion interne, tandis que le retour (314, 315) provenant du système hydraulique débouche dans le carter de fluide de lubrification (301) du moteur à combustion interne.

21. Système hydraulique selon la revendication 20, caractérisé en ce qu'un diaphragme d'étranglement (306) est prévu dans la conduite de refoulement (305) menant du circuit de lubrification au réservoir intermédiaire (307, 330).

22. Système hydraulique selon l'une des revendications 1 à 21, caractérisé en ce que le débit de la pompe hydraulique (309) est réglé au moyen d'un étranglement d'aspiration disposé du côté de l'entrée.

23. Système hydraulique selon l'une des revendications 20 à 22, caractérisé en ce que le réservoir intermédiaire (330) est constitué d'une chambre, ménagée dans le boîtier (316) de la pompe hydraulique (309), dans laquelle le conduit d'aspiration (328) de la pompe hydraulique (309) débouche et qui est raccordée à une conduite de refoulement (305) du circuit de lubrification et comporte un perçage de trop-plein (339) communiquant avec la cavité intérieure du moteur à combustion interne.

24. Système hydraulique selon l'une des revendications 1 à 23, caractérisé en ce que la pompe hydraulique (309) est une pompe à pistons plongeurs radiaux soumise à une action intérieure et comportant un évidement (320) qui est ménagé dans le boîtier de pompe (316) et s'ouvre vers le carter de moteur (317) et dans lequel le rotor (322) est disposé, cet évidement (320) étant fermé, vers le carter de moteur (317), par un disque de retenue (335) qui recouvre de l'extérieur le rotor (322), au moins dans la zone radialement extérieure, et qui comporte une ouverture centrale pour l'accouplement (333) reliant le rotor (322) à l'arbre d'entraînement (334).
